# FASCICULE DE BREVET EUROPEEN

(11) **EP 0 787 816 B1**
(45) Date de publication et mention de la délivrance du brevet: **07.04.1999**
(21) Numéro de dépôt: 97400092.9
(22) Date de dépôt: 16.01.1997
(51) Int. Cl.: C23C 2/12, F01N 7/16, F01N 3/28

(54) **Procédé de fabrication d'une enveloppe de pot catalytique et enveloppe ainsi obtenue**
Verfahren zur Herstellung einer Umhüllung eines katalytischen Auspuffsystems und durch dieses Verfahren enthaltene Umhüllung
Process for fabricating a coating on a catalytic exhaust system and coating obtained by this method

(30) Priorité: 25.01.1996 FR 9600875
(43) Date de publication de la demande: 06.08.1997
(73) Titulaire: ECIA - EQUIPEMENTS ET COMPOSANTS POUR L'INDUSTRIE AUTOMOBILE, F-25400 Audincourt (FR)
(72) Inventeur: Lecard, Jean-Pierre, 88260 Lerrain (FR)
(74) Mandataire: Bouget, Lucien

(56) Documents cités:
- EP-A- 0 263 893
- EP-A- 0 431 405
- EP-A- 0 587 474
- DE-A- 3 734 977
- US-A- 4 624 895
- PATENT ABSTRACTS OF JAPAN vol. 009, no. 125 (C-283), 30 Mai 1985 & JP 60 013057 A (NITSUSHIN SEIKOU KK), 23 Janvier 1985,

## Description

L'invention concerne un procédé de fabrication d'une enveloppe de pot catalytique d'une ligne d'échappement d'un véhicule automobile et l'enveloppe de pot catalytique obtenue.

La partie avant d'une ligne d'échappement d'un véhicule automobile qui joint le collecteur d'échappement du moteur du véhicule à un premier silencieux comporte généralement une tuyauterie avant comportant une bride qui est fixée sur le collecteur d'échappement et un pot catalytique qui comporte une enveloppe dans laquelle est contenu un matériau catalyseur.

L'enveloppe est généralement réalisée sous la forme d'un corps creux en tôle comportant une partie centrale cylindrique à section circulaire, ovale ou oblongue et deux parties d'extrémité tronconiques pour le raccordement de l'enveloppe aux tuyauteries amont et aval de la ligne d'échappement.

La partie avant de la ligne d'échappement est traversée par des gaz dont la température peut être comprise entre 700 et 850°C.

On utilise habituellement pour réaliser les pièces de la partie avant de l'échappement, c'est-à-dire la tuyauterie avant et l'enveloppe du pot catalytique, un acier inoxydable ferritique contenant 12 ou 17 % de chrome.

De tels aciers ferritiques ont un prix de revient relativement élevé, ce qui augmente le coût de construction des lignes d'échappement. En outre, ils sont peu résistants à la corrosion saline, ce qui est un inconvénient majeur du fait que la ligne d'échappement d'un véhicule automobile est précisément soumise, en service, à ce type de corrosion sur sa paroi externe.

On connaît d'autre part un procédé appelé aluminiage, pour recouvrir la surface d'un produit en acier d'une couche renfermant de l'aluminium et assurant la protection de l'acier contre l'oxydation à haute température.

La couche de revêtement de l'acier peut être obtenue au trempé, par défilement d'une bande de tôle soigneusement désoxydée, dans un bain d'aluminium fondu qui peut renfermer des éléments d'alliage tels que le silicium.

On a déjà proposé de réaliser certaines pièces d'une ligne d'échappement d'un véhicule automobile en acier aluminié voir EP-A-0 263 893 et EP-A-0 587 474. Du fait des exigences requises pour les enveloppes de pots catalytiques, en ce qui concerne leur tenue mécanique à haute température et leur tenue à la corrosion au contact des gaz traversant le catalyseur, la réalisation de ces enveloppes en acier faiblement allié aluminié n'a jamais été considérée comme possible ou souhaitable.

En effet, la protection du matériau catalyseur qui est fragile et dont le coût est élevé a toujours été considérée comme nécessitant l'utilisation d'alliages ayant une très bonne résistance aux températures élevées tels que des aciers ferritiques.

En fait les tôles d'acier faiblement allié aluminié utilisées jusqu'ici ne présentent pas des caractéristiques mécaniques suffisantes aux températures des gaz traités dans le pot catalytique pour assurer une bonne tenue de l'enveloppe et une protection efficace du catalyseur ainsi qu'une tenue à la corrosion assurant une durée de vie satisfaisante du pot catalytique.

Un des buts de l'invention est de fournir un procédé de fabrication d'une enveloppe de pot catalytique d'une ligne d'échappement d'un véhicule automobile comportant une partie centrale de forme cylindrique et deux parties d'extrémité de raccordement de forme tronconique, qui permette de diminuer sensiblement les coûts de production du pot catalytique et de garantir des propriétés satisfaisantes de tenue mécanique et de résistance à la corrosion à haute température.

Dans ce but, le procédé de fabrication de l'enveloppe comporte les étapes suivantes :
- fourniture d'un produit en acier de construction faiblement allié contenant en poids, 0,002 à 0,015% de carbone, 0,5 à 1,2 % de chrome, 0,5 à 1,2 % d'aluminium, 0,1 à 0,4 % de niobium et 0,1 à 0,4 % de titane, le reste, à l'exception d'impuretés inévitables étant constitué par du fer ;
- aluminisation du produit dans un bain d'aluminium ;
- formage d'au moins la partie centrale de l'enveloppe à partir du produit aluminié.

Afin de bien faire comprendre l'invention, on va maintenant décrire, à titre d'exemple, en se référant aux figures jointes en annexe, la fabrication d'une enveloppe de pot catalytique par le procédé de l'invention.

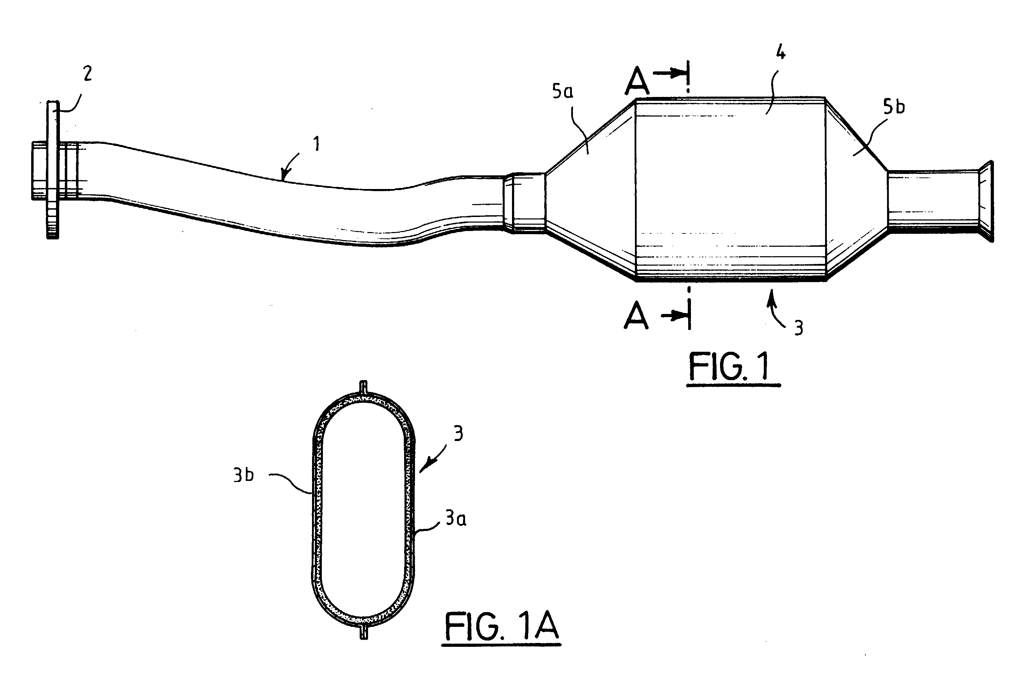

La figure 1 représente, en vue latérale, la tuyauterie avant et le pot catalytique d'une ligne d'échappement d'un véhicule automobile.

La figure lA est une vue en coupe suivant A-A de la figure 1.

Sur les figures 1 et 1A, on a représenté la partie avant d'un échappement d'un véhicule automobile qui comporte une tuyauterie avant 1 reliée, à l'une de ses extrémités, à une bride 2 de raccordement au collecteur d'échappement du moteur du véhicule et, à son autre extrémité, à une bride de raccordement à un pot catalytique qui comporte une enveloppe 3 en tôle constituée de deux demi-coquilles 3a et 3b assemblées l'une avec l'autre. Le pot catalytique est entouré d'un écran thermique et renferme un corps en matériau catalyseur.

L'enveloppe 3 du pot catalytique comporte une partie centrale 4 de forme cylindrique à section oblongue (voir figure 1A) et deux parties d'extrémité 5a, 5b de forme tronconique de raccordement du pot catalytique à une tuyauterie amont et à une tuyauterie aval de la ligne d'échappement, respectivement.

L'enveloppe 3 du pot catalytique de la ligne d'échappement représentée sur la figure 2 est destinée à recevoir des gaz à très hautes températures (températures supérieures à 700°C). Une telle enveloppe est généralement réalisée en un acier inoxydable ferritique tel que par exemple l'acier 1.4512 à très faible carbone et à 12 % de chrome. L'utilisation de pièces en tôle en acier ferritique formées pour constituer les deux demi-coquilles de l'enveloppe du pot catalytique augmente considérablement le prix de revient de la ligne d'échappement, du fait du coût élevé de l'acier ferritique.

Les aciers faiblement alliés qui ont une teneur totale en éléments d'alliage de l'ordre de quelques pourcents sont d'un prix de revient nettement inférieur aux aciers ferritiques qui renferment une proportion élevée de chrome.

Cependant, l'utilisation d'un acier faiblement allié de composition quelconque ne permet pas d'obtenir des propriétés mécaniques à haute température comparables à celles d'un acier ferritique et suffisantes pour la réalisation d'une enveloppe de pot catalytique utilisée en contact de gaz à haute température.

L'invention repose sur le choix d'un acier de construction faiblement allié d'une composition déterminée renfermant en particulier du chrome, de l'aluminium, du titane et du niobium et sur un traitement d'aluminiage d'un produit ayant la composition requise dans un bain d'aluminium et de préférence dans un bain renfermant de l'aluminium et du silicium.

Pour réaliser les coquilles 3a, 3b de l'enveloppe du pot catalytique, on a utilisé une tôle en acier faiblement allié de la société SOLLAC renfermant, en poids, 0,002 à 0,015 % de carbone, 0,5 à 1,2 % de chrome, 0,5 à 1,2 % d'aluminium, 0,1 à 0,4 % de niobium et 0,1 à 0,4 % de titane, le reste, à l'exception des impuretés inévitables, étant constitué par du fer, protégée par un revêtement réalisé par aluminiage.

L'aluminiage de l'acier est réalisé au trempé dans un bain d'aluminium renfermant du silicium.

La tôle d'acier faiblement allié soigneusement désoxydée est plongée dans le bain d'aluminium renfermant du silicium à une température contrôlée.

La tôle revêtue d'une couche d'aluminium renfermant du silicium est utilisée pour la réalisation, par exemple par emboutissage des deux demi-coquilles de l'enveloppe 3a, 3b du pot catalytique.

Il s'est avéré que l'utilisation de l'acier aluminié à la place d'acier inoxydable ferritique à 12 ou 17 % de chrome permet de réaliser une économie d'au moins 10 % sur le coût des matières utilisées pour la fabrication de l'enveloppe de pot catalytique d'un véhicule automobile.

En outre, l'enveloppe de pot catalytique de la ligne d'échappement a une parfaite tenue mécanique et résiste parfaitement à l'oxydation à la température des gaz d'échappement et à l'attaque corrosive par les gaz traversant le pot catalytique.

De plus, l'enveloppe de pot catalytique en acier aluminié a une meilleure résistance à la corrosion saline externe qu'une enveloppe en acier inoxydable ferritique.

L'invention ne se limite pas au mode de réalisation qui a été décrit.

Au lieu de réaliser l'enveloppe 3 du pot catalytique à partir de deux demi-coquilles embouties, on peut réaliser séparément, par exemple à partir de pièces de forme tubulaire, la partie centrale cylindrique 4 et les parties d'extrémité 5a et 5b de l'enveloppe 3 qui sont assemblées par soudage. Dans ce cas, il est possible de réaliser seulement la partie centrale cylindrique 9 en acier aluminié, les parties de raccordement 5a et 5b étant réalisées par exemple en acier inoxydable ferritique. La partie centrale cylindrique de l'enveloppe en acier aluminié peut être constituée par une pièce tubulaire obtenue par un procédé métallurgique tel qu'un tube sans soudure ou par une pièce de forme tubulaire en tôle roulée et soudée.

L'invention s'applique à la fabrication des enveloppes de pot catalytique de lignes d'échappement de véhicules automobiles, quelle que soit la forme de ces enveloppes. En particulier la partie centrale cylindrique de l'enveloppe peut présenter une section de forme quelconque, par exemple circulaire, ovale ou oblongue.

## Revendications

1. Procédé de fabrication d'une enveloppe d'un pot catalytique d'une ligne d'échappement d'un véhicule automobile comportant une partie centrale de forme cylindrique et deux parties d'extrémité de raccordement de forme tronconique, comprenant les étapes suivantes :
- fourniture d'un produit en acier de construction faiblement allié contenant en poids, 0,002 à 0,015% de carbone, 0,5 à 1,2 % de chrome, 0,5 à 1,2 % d'aluminium, 0,1 à 0,4 % de niobium et 0,1 à 0,4 % de titane, le reste, à l'exception d'impuretés inévitables étant constitué par du fer ;
- aluminisation du produit dans un bain renfermant de l'aluminium ;
- formage d'au moins la partie centrale de l'enveloppe à partir du produit aluminié.

2. Procédé suivant la revendication 1, dans lequel le bain d'aluminiage renferme de l'aluminium et du silicium.

3. Procédé suivant l'une des revendications 1 ou 2, dans lequel le produit en acier de construction aluminié est une tôle et suivant lequel on réalise par emboutissage de la tôle aluminiée deux demi-coquilles et on assemble les deux demi-coquilles pour constituer l'enveloppe entièrement en acier aluminé.

4. Procédé suivant l'une des revendications 1 ou 2 suivant lequel on réalise au moins la partie centrale de l'enveloppe à partir d'une pièce de forme tubulaire en acier de construction aluminié et on assemble les parties d'extrémité de l'enveloppe et la partie centrale par soudage.

5. Enveloppe d'un pot catalytique d'une ligne d'échappement d'un véhicule automobile comportant une partie centrale de forme cylindrique et deux parties d'extrémité de raccordement de forme tronconique, dans laquelle, la partie centrale au moins est en un acier de construction contenant, en poids, 0,002 à 0,015% de carbone, 0,5 à 1,2 % de chrome, 0,5 à 1,2 % d'aluminium, 0,1 à 0,4 % de niobium et 0,1 à 0,4 % de titane, le reste, à l'exception d'impuretés inévitables étant constitué par du fer, et recouverte d'une couche de revêtement réalisée par aluminiage.

6. Enveloppe suivant la revendication 5, dans laquelle la couche de revêtement contient de l'aluminium et du silicium.

7. Enveloppe suivant la revendication 5 ou 6, comprenant deux coquilles entièrement en tôle d'acier de construction aluminié assemblées entre elles.

8. Enveloppe suivant la revendication 5 ou 6, comprenant une partie centrale constituée par une pièce tubulaire de forme cylindrique en acier de construction aluminié et deux pièces tubulaires de forme tronconique assemblées à la partie centrale par soudage.

## Patentansprüche

1. Verfahren zur Herstellung einer für eine Auspuffanlage eines Kraftfahrzeugs geeigneten Katalysatortopfhülle mit einem zylinderförmigen Mittelabschnitt und zwei kegelstumpfförmigen Anschluß-Endabschnitten, mit folgenden Schritten:
- Bereitstellung eines Erzeugnisses aus niedrig legiertem Baustahl, der 0,002 bis 0,015 Gewichtsprozent Kohlenstoff, 0,5 bis 1,2 Gewichtsprozent Chrom, 0,5 bis 1,2 Gewichtsprozent Aluminium, 0,1 bis 0,4 Gewichtsprozent Niob und 0,1 bis 0,4 Gewichtsprozent Titan enthält und ansonsten bis auf unvermeidliche Verunreinigungen aus Eisen besteht;
- Aluminisierung des Erzeugnisses in einem Aluminiumbad;
- Bildung wenigstens des Mittelabschnitts der Hülle aus dem aluminisierten Erzeugnis.

2. Verfahren nach Anspruch 1, bei dem das Aluminiumbad Aluminium und Silizium enthält.

3. Verfahren nach Anspruch 1 oder 2, bei dem das Erzeugnis aus aluminisiertem Baustahl ein Blech ist und durch Tiefziehen des aluminisierten Blechs zwei Halbschalen hergestellt werden und die beiden Halbschalen zusammengebaut werden, um die Hülle ganz aus aluminisiertem Stahl zu bilden.

4. Verfahren nach Anspruch 1 oder 2, bei dem wenigstens der Mittelabschnitt der Hülle aus einem rohrförmigen Bauteil aus aluminisiertem Baustahl hergestellt wird und die Endabschnitte der Hülle und der Mittelabschnitt durch Schweißen zusammengebaut werden.

5. Für eine Auspuffanlage eines Kraftfahrzeugs geeignete Katalysatortopfhülle mit einem zylinderförmigen Mittelabschnitt und zwei kegelstumpfförmigen Anschluß-Endabschnitten, wobei wenigstens der Mittelabschnitt der Hülle aus einem Baustahl besteht, der 0,002 bis 0,015 Gewichtsprozent Kohlenstoff, 0,5 bis 1,2 Gewichtsprozent Chrom, 0,5 bis 1,2 Gewichtsprozent Aluminium, 0,1 bis 0,4 Gewichtsprozent Niob und 0,1 bis 0,4 Gewichtsprozent Titan enthält und ansonsten bis auf unvermeidliche Verunreinigungen aus Eisen besteht, und wenigstens der Mittelabschnitt von einer durch Aluminisierung gebildeten Deckschicht überzogen ist.

6. Hülle nach Anspruch 5, bei der die Deckschicht Aluminium und Silizium enthält.

7. Hülle nach Anspruch 5 oder 6, mit zwei zusammengebauten Schalen, die ganz aus aluminisiertem Baustahlblech bestehen.

8. Hülle nach Anspruch 5 oder 6, mit einem Mittelabschnitt aus einem rohrförmigen zylindrischen Bauteil aus aluminisiertem Baustahl und zwei rohrförmigen kegelstumpfförmigen Endabschnitten, die mit dem Mittelabschnitt durch Schweißen zusammengebaut sind.

## Claims

1. Process for the production of an envelope of a catalytic converter of a car exhaust line having a central, cylindrical portion and two truncated cone-shaped, end portions, comprising the following stages:
- supplying a weakly alloyed, structural steel product containing, by weight, 0.002 to 0.015% carbon, 0.5 to 1.2% chromium, 0.5 to 1.2% aluminium, 0.1 to 0.4% niobium and 0.1 to 0.4% titanium, the remainder, with the exception of inevitable impurities, being constituted by iron,
- aluminization of the product in an aluminium-containing bath,
- forming at least the central portion of the envelope from the aluminized product.

2. Process according to claim 1, wherein the aluminizing bath contains aluminium and silicon.

3. Process according to one of the claims 1 or 2, wherein the aluminized structural steel product is a sheet and wherein by stamping the aluminized sheet two half-shells are produced and are assembled in order to form the envelope which is entirely of aluminized steel.

4. Process according to one of the claims 1 or 2, wherein at least the central portion of the envelope is produced from a tubular, aluminized, structural steel part and the end portions and the central portion of the envelope are assembled by welding.

5. Envelope of a catalytic converter of a car exhaust line having a central, cylindrical portion and two truncated cone-shaped, connecting, end portions, wherein at least the central portion is of a structural steel containing, by weight, 0.002 to 0.015% carbon, 0.5 to 1.2% chromium, 0.5 to 1.2% aluminium, 0.1 to 0.4% niobium and 0.1 to 0.4% titanium, the remainder, with the exception of inevitable impurities, being constituted by iron and covered with a covering coating produced by aluminization.

6. Envelope according to claim 5, wherein the covering coating contains aluminium and silicon.

7. Envelope according to claim 5 or 6, comprising two shells entirely of assembled, aluminized, structural steel sheeting.

8. Envelope according to claim 5 or 6, comprising a central portion constituted by a cylindrical, aluminized, structural steel, tubular part and two truncated cone-shaped, tubular parts assembled with the central portion by welding.
